# EUROPEAN PATENT SPECIFICATION

(11) **EP 0 620 690 B1**
(45) Date of publication and mention of the grant of the patent: **27.01.1999**
(21) Application number: 94302618.7
(22) Date of filing: 13.04.1994
(51) Int. Cl.: H04N 7/167

(54) **Video signal encrypting apparatus**
Anordnung zur Verschlüsselung eines Videosignals
Dispositif de chiffrage d'un signal vidéo

(30) Priority: 15.04.1993 JP 113804/93
(43) Date of publication of application: 19.10.1994
(73) Proprietor: MATSUSHITA ELECTRIC INDUSTRIAL CO., LTD., Kadoma-shi, Osaka-fu, 571 (JP)
(72) Inventor: Hirashima, Masayohi, Ibaraki-shi, Osaka, 567 (JP)
(74) Representative: Crawford, Andrew Birkby

(56) References cited:
- EP-A- 0 380 181
- EP-A- 0 464 562
- EP-A- 0 571 753
- DE-A- 3 927 338
- US-A- 4 547 802

## Description

The present invention relates to a video signal encrypting apparatus capable of processing signals to make information signals secret in the case of storage, satellite communication, wireless communication, wired communication or the like of the data recorded by video camera, video tape recorder. optical disk or the like without being known to the others.

Recently, as a result of advancement of various communication media such as communication satellite and recording media such as optical disk, data communication and information transmission in a very wide area and at high speed are realized. On the other hand. by information transmission by data communications, many people have an easy access and it is difficult to keep secrecy of the information to be transmitted.

For example, in-house communication using communication satellite, data communication including enterprise secret information by television conference, and in-house experiment data are often transmitted by recording in information recording media such as video tape recorder (VTR) and optical disk.

Such information, picture and sound are usually confidential. To make such information secret, a scramble encoder having a scrambling function is used. A conventional scrambling encoder, however, requires a huge encrypting system and encoder, and encrypting process was not easy. Hence, the apparatus for easily recording and reproducing secret information in VTR or the like was huge in size and expensive, which was the bottleneck for transmission of secret information.

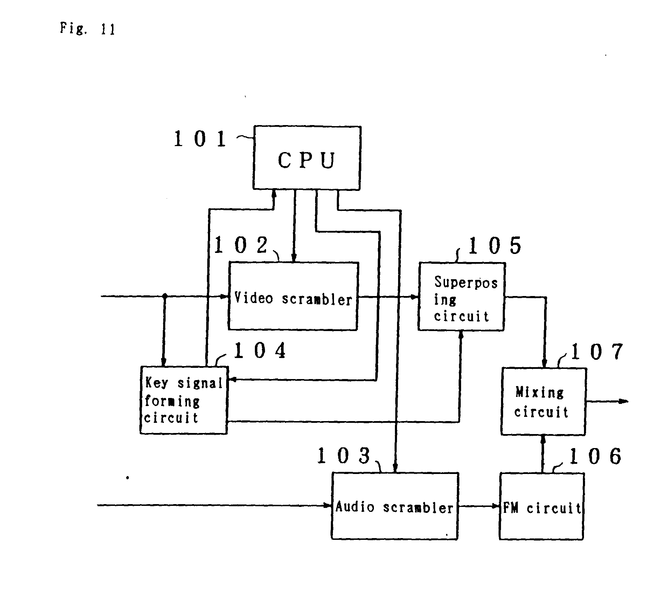

Fig. 11 is a block diagram showing a schematic constitution of a conventional scrambling encoder. In the diagram, numeral 101 is a computer for controlling the entire scrambling encoder (hereinafter referred to as CPU). and various types are used depending on the system size, ranging from a personal computer to a general-purpose computer. Video signals and audio signals are applied to a video scrambler 102 and an audio scrambler 103, respectively. In synchronism with the video signal, a key signal is formed by a key signal forming circuit 104, and is superposed in a superposing circuit 105 with the video signal scrambled by the video scrambler 102. The audio signal is frequency-modulated in an FM circuit 106, and mixed with the output of the superposing circuit 105 in a mixing circuit 107, thereby obtaining a scrambled composite video signal.

The operation of such scrambling encoder is described below. Various methods are considered for the video scrambler 102, and this is to describe the scrambling method by line rotation processing for randomly exchanging the scanning lines of video signals respectively on the halfway. The disconnection point of rotation is determined by the CPU 1, and supposing this value to be X, the disconnection point X is encoded by a key signal (Kj), and the encoded X is formed as a binary signal within the vertical blanking period by the key signal forming circuit. To scramble the audio signal, the audio signal is A/D converted, and a pseudo-random number sequence pulse signal (PN signal) is added to encode. Only the initial value of the PN signal is superposed and sent out.

At the receiving side of such signal, a reverse operation of scrambling encoder,that is, descrambling by scrambling decoder is effected. For example, to descramble the sound, the PN signal initial value is fed into the PN generating circuit, and a PN signal series for descrambling is generated, and the original signal is demodulated on the basis thereof. To descramble a video signal, from the PN signal initial value sent forth in every field or specific period, the read start position of video signal in the horizontal scanning period is logically determined. The algorithm for determining is not disclosed, and safety of secrecy is enhanced. Such conventional scrambling encoder and its decoder are large in the circuit scale of scrambling encoder and decoder, and the apparatus was large and expensive, and it was difficult to assemble into the television receiver, home-use video tape recorder or video camera. Therefore, only the descrambler (decoder) unit was reduced in size, and the descrambler (decoder) device was connected to the television receiver.

EP-A-0571753 discloses a video signal encryption and decryption apparatus having the features set out in the pre-characterising portion of claim 1.

DE-A-3927338 discloses a video signal scrambling and descrambling apparatus having a memory of storing data in a first address sequence, an address unit for reading out these data in a second address sequence differing from the first, line by line, by the use of a code from unit.

The address unit has a first pseudo-stochastic number generator for setting the code initially, a code memory for storing the random distribution of code words, a second pseudo-stochastic number generator starting with the initial value from the first generator, and a decoding matrix for forming the second address sequence from these code words' and a pseudo code produced by the second generator.

US-A-4547802 discloses a video signal scrambling and descrambling apparatus where scrambling is accomplished by shifting the end portion of the lines of video to the beginning by recirculating the data stored in charge coupled devices for a portion of a line of the video signal. Two data charge coupled devices are provided so that when the data stored in one device is being recirculated for scrambling the subsequent line can be stored in a second device. The time interval is determined by a random number generator.

It is an object of the invention to present an encrypting apparatus for a handy home use by downsizing and integrating the scrambling encoder and its decoder which were conventionally large in size and expensive.

The present invention provides a video signal encrypting apparatus for scrambling and descrambling video signal of television signal comprising a memory for holding key data for encrypting, a pair of line memories for writing input video signal alternately in every horizontal scanning line, a pseudo-random number sequence pulse (PN) generator in which the key data of the memory is set as initial value for issuing mutually different pseudo-random pulse signals in every horizontal scanning line, an address setting circuit for setting the value corresponding to the output of the PN generator as initialvalue when scrambling, and the value of subtracting the output of the PN generator from the maximum address value of the line memory as initial value when descrambling, and an address counter for generating an address consecutive from the address set by the address setting circuit, and applying address signals alternately to the pair of line memories in each horizontal scanning line unit, characterised in that the PN generator is either a linear or non-linear feedback field programmable shift register.

In the preferred form of the invention such features as scrambling and descrambling are effected by one scrambling codec. When scrambling, first the PN generator issues mutually different pseudo-random pulse signals in every horizontal scanning line, using the output of the memory for holding the key data as initial value. The signal corresponding to the output of the PN generator is set as initial value in the address counter by the address setting circuit. The address counter reaches the maximum address from the set address, and returns to the initial address, then generates a consecutive address from one before the set address, applies the address signals alternately to a pair of line memories to read the video signals alternately written in the pair of line memories alternately in every scanning line unit, and thus performs line rotation. By thus reading out from different positions in every horizontal scanning line, the video signal is scrambled. Thus input video signal is scrambled, and the scrambled video signal is issued.

When descrambling, similarly, while writing alternately into the pair of line memories, the value subtracting the output of the PN generator from the maximum address value of the line memory set by the address setting circuit as initial value in every horizontal scanning line. Therefore, the address counter reaches the maximum address from the set address, returns to the minimum address, and generates a consecutive address up to one before the set address, and applies the address signal alternately to the pair of line memories in every scanning line unit, and reads out the video signal alternately written in the line memories, thereby reproducing the original signal. Thus, in the same constitution as when scrambling, the video signal is descrambled, and therefore the scrambled data signal recorded in recording medium such as tape can be decoded.

In order that the present invention be more readily understood, embodiments thereof will now be described by way of example with reference to the accompanying drawings, in which: -
Fig. 1 is a perspective view showing the appearance of a video signal encrypting apparatus;
Fig. 2 is block diagram showing the constitution of a video signal encrypting apparatus;
Fig. 3 is a block diagram showing the constitution of portions for scrambling and descrambling of the video signal encrypting apparatus;
Fig. 4 is a time chart showing the operation of the video signal encrypting apparatus;
Fig. 5 is a diagram showing an example of signal configuration change of horizontal scanning line in a first method when scrambling and descrambling;
Fig. 6 is a diagram showing an example of signal configuration change of horizontal scanning line in a second method when scrambling and descrambling;
Fig. 7 is a block diagram showing the constitution of another video signal encrypting apparatus;
Fig. 8 is a block diagram showing two different examples of nonlinear shift register;
Fig. 9 is a block diagram showing different parts from Fig. 2 in a preferred embodiment of the invention;
Fig. 10 is a block diagram showing different parts from Fig. 2 in another embodiment of the invention.
Fig. 11 is a block diagram showing the constitution of a conventional scrambling apparatus.

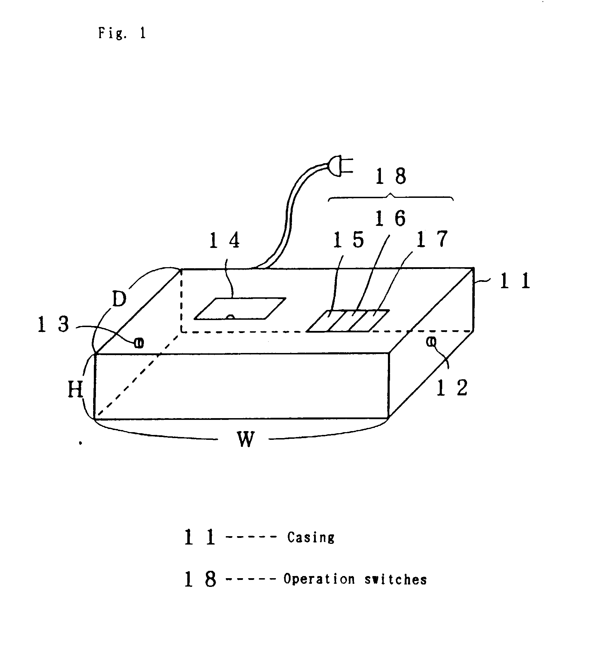

Referring now to the drawings, some of the embodiments of the invention are described in detail below. Fig.1 is a perspective outline view of a video signal encrypting apparatus. As shown in the diagram, an input terminal 12 and an output terminal 13 are provided in a casing 11. The casing 11 also has a socket for freely attaching and detaching a read-only memory as mentioned below. Numeral 14 denotes a lid for this socket. The casing 15 also comprises operation switches 18 consisting of encoding start switch 15, decoding start switch 16, and stop switch 17.

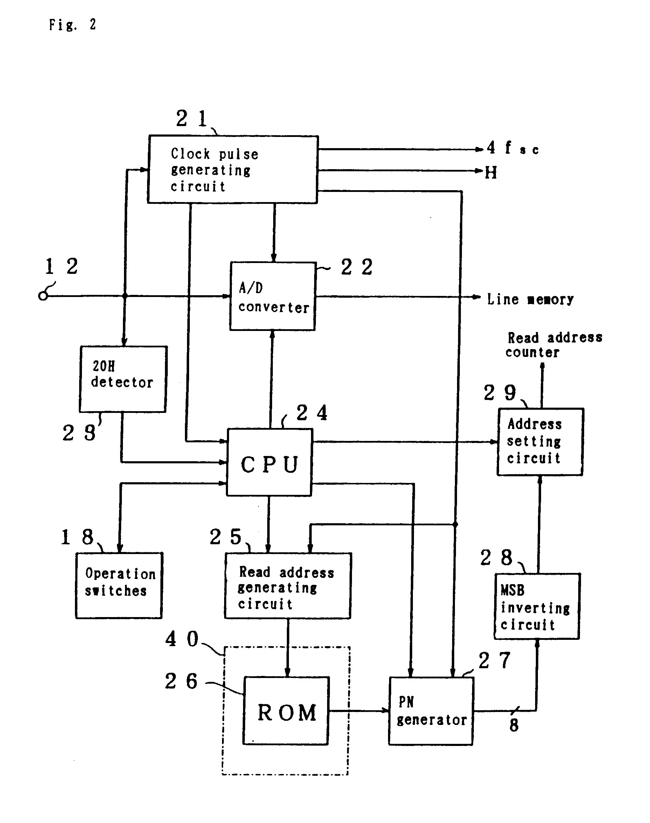

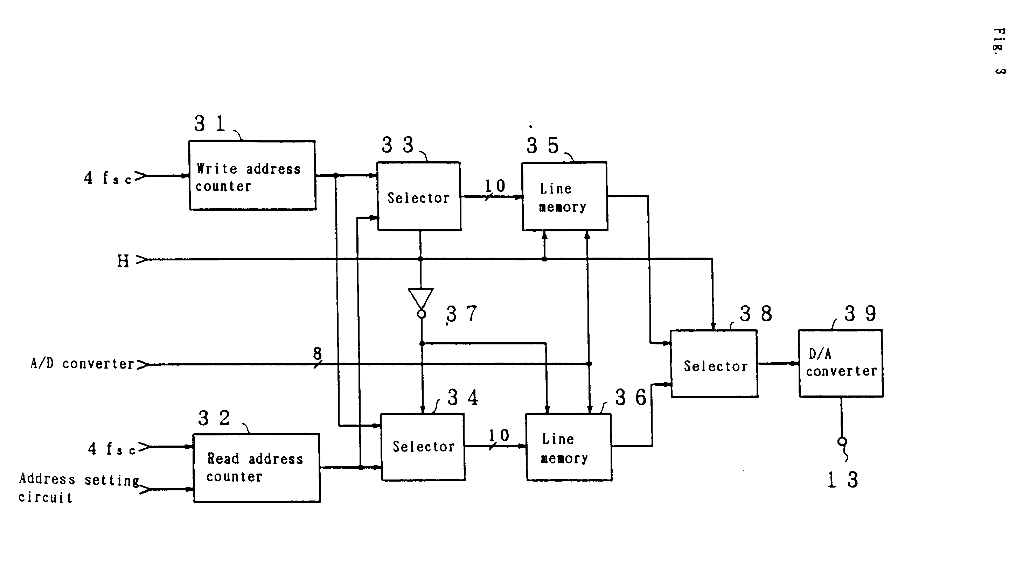

Fig. 2 and Fig. 3 are block diagrams showing the constitution inside a video signal encrypting apparatus. In Fig. 2, an input terminal 12 is connected to a clock pulse forming circuit 21. an A/D converter 22, and a 20H detector 23. The clock pulse forming circuit 21 forms 4 f_{sc} by reproducing a color subcarrier (f_{sc}) on the basis of horizontal sync signal H and vertical sync signal V, and also feeds clock signal and gate pulse necessary for parts of the apparatus. The 20H detector 23 detects the video signal of the 20th horizontal scanning line (hereinafter called 20H), confirms that the video signal portion is all white or 100%, and gives the detection signal to the CPU 24.

In this video signal encrypting apparatus, a CPU 24 is connected as control means for controlling actions of parts. The operation switches 18 mentioned above are connected to the CPU 24 as input means. The CPU 24 send a trigger signal into an A/D converter 22 when starting scrambling, and issues necessary control signals to parts. In the CPU 24, a nonvolatile memory 26 using read-only memory (ROM) is connected through a read address generating circuit 25. The memory 26 is for storing the key data in 64 or more bits, and the read signal is given to a PN generator 27.

The PN generator 27 is composed of a feedback shift register for generating a 16-bit random signal. The feedback shift register is for generating a pseudo-random signal series (PN series). An arbitrary 8-bit output is given to an MSB inverting circuit 28.

The output of the PN generator 27 is to determine the cut point of horizontal scanning line. Supposing there are 186 cut points in 1 H, the MSB exceeding 186 is inverted by using 8-bit data. The MSB inverting circuit 28 is for inverting the MSB by the output of the PN generator 27, and its output n (= 0 to 185) is given to an address setting circuit 29. A first address setting method (first method, hereinafter) of the address setting circuit 29 is to calculate and set the initial value of the reading address of every horizontal scanning line, so as to be 4n when scrambling, and 744-4n, supposing the maximum value of the reading address to be 744 or four times the number of cut points 186, when descrambling. In a second address setting method (second method) of the address setting circuit 29, to the contrary, it may be 744-4n when scrambling and 4n when descrambling.

Fig. 3 is a block diagram showing the portions for scrambling and descrambling of video signal. In the diagram, from the clock pulse forming circuit 21 shown in Fig. 2, a clock signal of 4 f_{sc} is given to a write address counter 31 and a read address counter 32. These address counters are counters for counting the input clocks, and their parallel outputs are given to selectors 33 and 34, respectively. The A/D converter 22 in Fig. 2 is to convert an analog video signal into a digital signal, and its output is given to line memories 35, 36. To the selectors 33 and 34, changeover signals synchronized with horizontal sync signal H and mutually inverted through an inverter 37 are given through the clock pulse forming circuit 21, and the write address of the write address counter 31 and read address of the read address counter 32 are alternately changed over, and given to the line memories 35 and 36. The line memories 35 and 36 are memories for storing video signals of one scanning line each as 744 dots and in 8 bits each. In the line memories 35, 36, alternately in every 1 H, data is written into the address issued by the write address counter 31 selected by the selectors 33, 34 is written, and when reading, data is alternately read out by the read address from the read address counter 32 selected by the selectors 33, 34. A selector 38 is synchronized with the selectors 33, 34, and selects the read signal from the line memories 35 and 36. The output of the selector 38 is given to the D/A converter 39. The D/A converter 39 is to convert the selected signal into an analog signal, and its output is connected to the output terminal 13. The memory 26 in Fig. 2 is an EPROM, and is put in a proper package 40 in a detachable form.

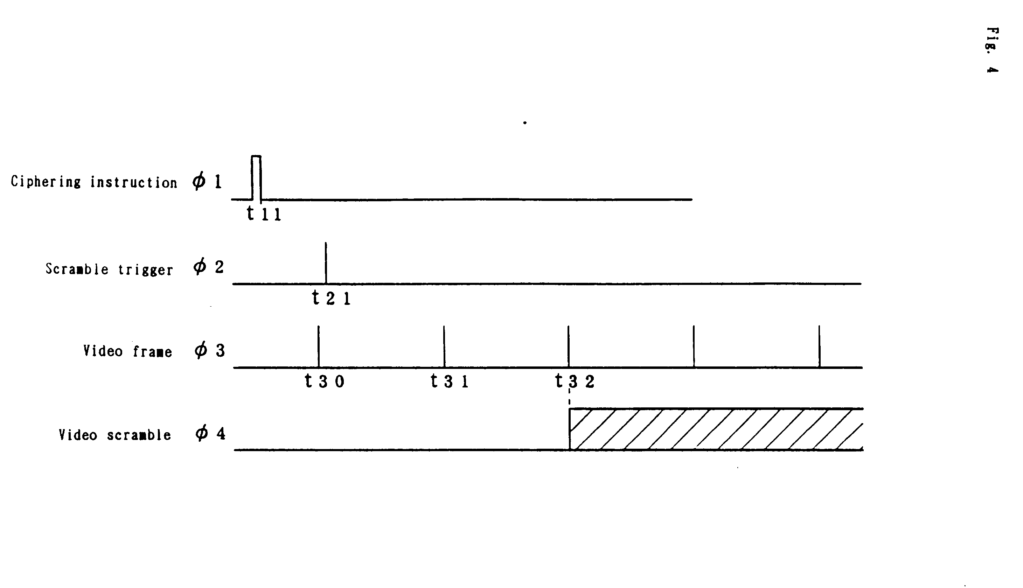

The operation of the apparatus of Fig. 2 is described below while referring to the time chart in Fig. 4. A case of recording and reproducing in a VTR is presented below as an example. First, to scramble the video signal entering the input terminal 12, the encoding start switch 15 of the operation switches 18 is manipulated. As shown in Fig. 4, when the instruction of encoding (ciphering) is terminated at time t₁₁, this signal is sent to the CPU 24. The CPU 24 sends a control signal to the A/D converter 22, and generates a scramble trigger signal. The A/D converter 22 performs A/D conversion on the basis of the clock pulse of the clock pulse forming circuit 21. At this time, all video signals of 20 H are set to white level to be used as scramble trigger signal. For example, supposing a scramble trigger signal is given at time t₂₁ right after video signal starting from t₃₀, considering the time for preparation of decoding process of the encoded signal, encoding of video signal is to be started about 2 frames later from t₂₁, that is, at t₃₂.

While the video signal is not scrambled, the video signal is converted into an 8-bit digital value in the A/D converter 22, and alternately written into one of the line memories 35 and 36 in very 1H, and the signal is read out from the other line memory than the line memory in which data is written. In this case, later than one line, the signal is issued to the D/A converter 39 through the selector 38.

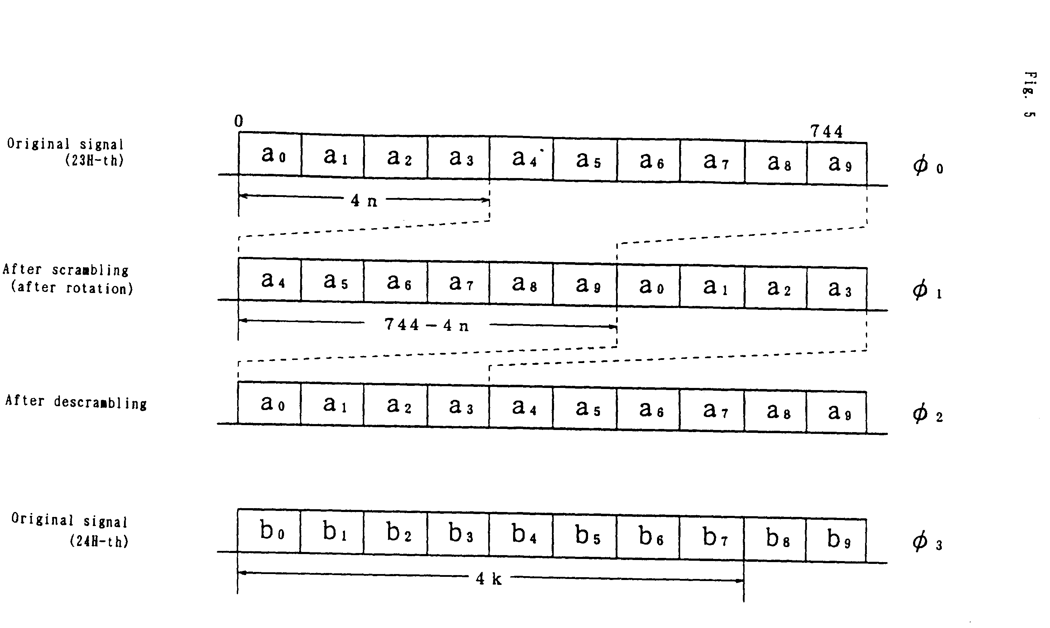

To scramble (to change over position in scanning line, that is, line rotation method), the operation is as follows. In the case of line rotation, the operation is started by adjusting the read address of line memory to the cut point of the video signal, that is, the changeover position for line rotation by changing over signals on scanning line. As the cut point, the 8-bit output from the PN generator 27 is used. Since the cut point is defined within the maximum of 186 from the maximum address of the line memory as mentioned above, the MSB is inverted by the MSB inverting circuit 28 if exceeding 186. The output of the MSB inverting circuit 28 is an 8-bit signal of 0 to 185, and is different in every line. Suppose it to be n. In the address setting circuit 29. 4n is preset until the end of the 22H-th video signal of the input terminal 12 (corresponding to 21H in the output of D/A converter 39). That is, when scrambling, 4 × n is operated. Thus, from the beginning of 23H (22H of the output of the D/A converter 39) of the video signal fed into the input terminal 12, the read address counter 32 counts 4n, 4n+1, 4n+2, ..., 744, 0, 1, 2, 3, ..., 4n-1. Accordingly, as shown in the "original signal (23H) φ₀" in Fig. 5, the data a₀ to a₉ of one horizontal scanning line written in the line memory 35 are read out as a₄, a₅, ..., a₉, a₀, a₁, a₂, a₃, and scrambled signals are obtained such as "φ₁ after scrambling." The signal number 24H entered in this period is directly written into the line memory 36. When starting to read out 24H after reading "φ₁ after scrambling," the read start address set in the read address counter 32 is shifted by specified bits, and changed to other numeral k instead of n. The number of bits to shift the shift register in every 1H is preliminarily determined at the time of system design.

While data 25H is being fed into the line memory 35 through input terminal 12, the data (24H) of line memory 36 is read out. At this time, the output of the read address counter 32 counts up from 4k to 4k+1 and so forth as shown in Fig. 5. This is same as when reading out 23H from line memory 35. Therefore, line rotation is applied with 4k as cut point. Thus, video signals f rom 23H to 236H of the field starting from t₃₂ in Fig. 4 are scrambled by rotation processing in each horizontal scanning line unit. The user records and reproduces thus scrambled video signals,and therefore the encoded video signals are not known to others and can be used in a closed loop. By detachably incorporating the memory 26 storing the key data into the socket of the casing by using the package 40, the original picture cannot be reproduced unless the same memory 26 as the one used at the time of recording is obtained.

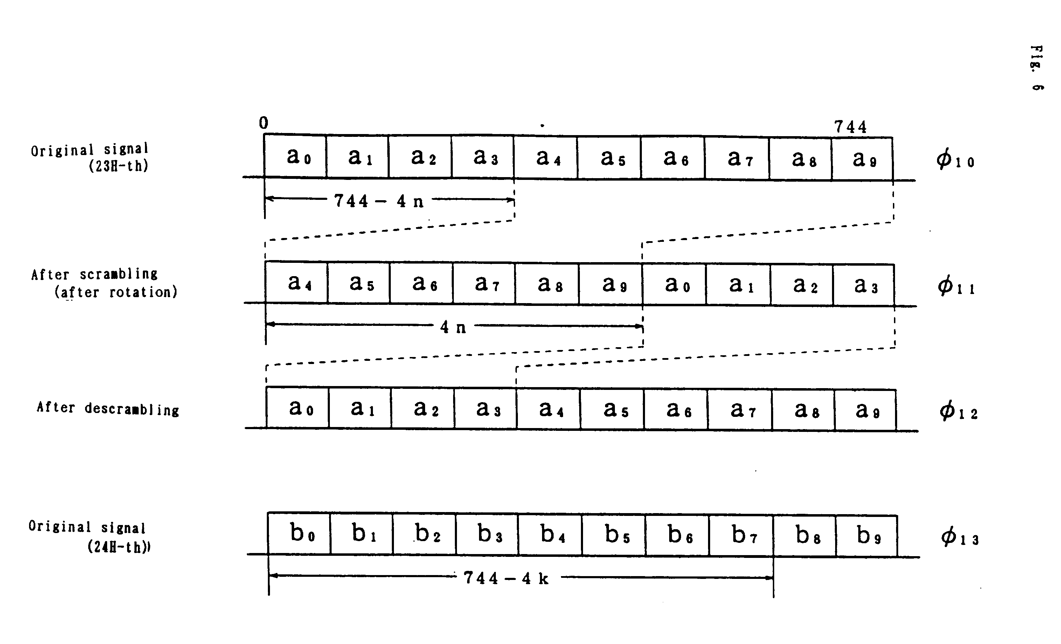

The second method is described below while referring also to Fig. 6. Until the end of 22H of video signal of input terminal 12 (corresponding to 21H of output of the D/A converter 39), the read address counter 32 is preset at 744-4n. The read address counter 32 counts up 744-4n+1, 744-4n+2, ..., 744-4n+4n, 0, 1, 2, 3, ..., 744-4n-1. As a result, as shown in "original signal (23H) φ₁₀)" in Fig. 6, data a₀ to a₉ of horizontal scanning line of 23H written in the line memory 35 are read out as a₄, a₅, ..., a₉, a₀, a₁, a₂, a₃, and scrambled such as φ₁₁.

The signal of 24H entered in this reading period is written into the line memory 36 such as φ₁₃ in Fig. 6. When starting to read out 24H, the read start address set in the read address counter 32 is changed to other numeral k instead of n as a result of shifting by specified bits (that is, 744-4k). Therefore, the output of the read address counter 32 counts up as 744-4k, 744-4k+1, ... as shown in Fig. 6. In this way, same as when reading out the 23H-th from the line memory 35, the 24H-th is read out as b₈, b₉, b₀, ..., b₇ from the line memory 36. Therefore, rotation is applied with 744-4k as cut point.

Incidentally, the microcomputer 24 sets or changes the value of the read address generating circuit 25, for example, once in every field or once in every 1H. This procedure is predetermined. The scramble trigger is generated once after key input, but when reproducing the scrambled signal recorded in VTR or video disk, it is not always started from the beginning. Therefore, it is desired to generate scramble trigger pulses at every specific period to superpose on the video signal as mentioned above. This can be easily realized by the CPU 24. For example, a control signal is issued from the A/D converter 22 from the CPU 24 in every minute (1800 fields), and the scramble trigger signal is generated to set the 20H-th video signal at white level. Therefore, scrambling cannot be canceled until coming up to the position of this scramble trigger pulse.

What is important herein is that 8 bits of output of the PN generator 27 are used as the cut point of the scrambling in the line rotation method, and that the cut point is defined within the maximum of 186 from the maximum address of the line memory. That is, the relation of n and k for determining the cut point in every one horizontal scanning period (that is, 1H) of the video signal is nonlinear, and cannot be predicted. More specifically, the read start address set by the read address counter 32 is shifted by specified bits in every 1H, and changed to other numeral k instead of n. The number of bits to shift the shift register in every 1H is determined preliminarily at the time of system design. Therefore, if n may be known, k cannot be known. That is, by ciphering the cut point of rotation, advanced secret processing of video signal is realized.

Described next is the operation of reading out the signal scrambled in the first method from the VTR or video disk and descrambling. First, the reproduced scrambled video signal is fed into the input terminal 12. As a result, period 20H is detected by the 20H detector 23, and when the video signal is all white (100%), it is detected and transmitted to the CPU 24. In the CPU 24, when this signal is detected, the address setting circuit 29 is set in descrambling state.

In Fig. 5, in order to return "φ₁ after scrambling" into "φ₂ after descrambling," it is necessary to set the read address counter 32 to the initial state of (744-4n) at the timing of output of n as the output of the PN generator 27. Accordingly, the address setting circuit 29 operates 744-4n when descrambling, and presets in the read address counter 32 as read address. As a result, as in φ₂ in Fig. 5, the horizontal scanning line of 23H starts from a₀, that is, a₀, ..., a₃, a₄, ..., a₉, and is sequentially read out in the same state as in φ₀ up to a₉. In this period, the rotated 24H-th signal is recorded in the line memory 36, and by reading out sequentially from b₀ to b₁, ... from 744-4k when starting to read, it is possible to descramble. On the other hand, as for the write address counter 31, it is set so as to write the input directly in the line memory 35 or 36 in every horizontal scanning line. Therefore, special processing for descrambling is not necessary.

In the second method mentioned above, to return "φ₁₁ after scrambling into "φ₁₂ after descrambling" in Fig. 6, at the timing of delivering n as the output of the PN generator 27, it is necessary to set the read address counter 32 initially to 4n. The address setting circuit 29 presets 4n into the read address counter 32 when descrambling. As a result, as shown in "φ₁₂ after descrambling" in Fig. 6, the 23H-th horizontal scanning line is sequentially read out in the same state as φ₁₀ from a₀ to a₉. In this period, since the rotated 24H-th signal is recorded in the line memory 36, it is possible to descramble by reading out from 4 k sequentially as b₀, b₁, ... when starting to read out the 24H-th.

The video signal of each horizontal scanning line thus read out is selected by the selector 38 and given to the D/A converter 39, and is converted into an analog video signal. A descrambled video signal is issued from the output terminal 13.

As specifically described above, most circuits shown in Figs. 2 and 3 are digital signal processing circuits, which can be easily formed into LSI. That is, the number of gates of operation switches 18 (15 to 17), clock pulse forming circuit 21, A/D converter 22, and D/A converter 39 are 20,000 to 30,000 gates, which can be integrated into one chip. As for clock pulse forming circuit 21 and 20H detecting circuit 23, circuits of similar functions used in character broadcast receiver may be partly revised.

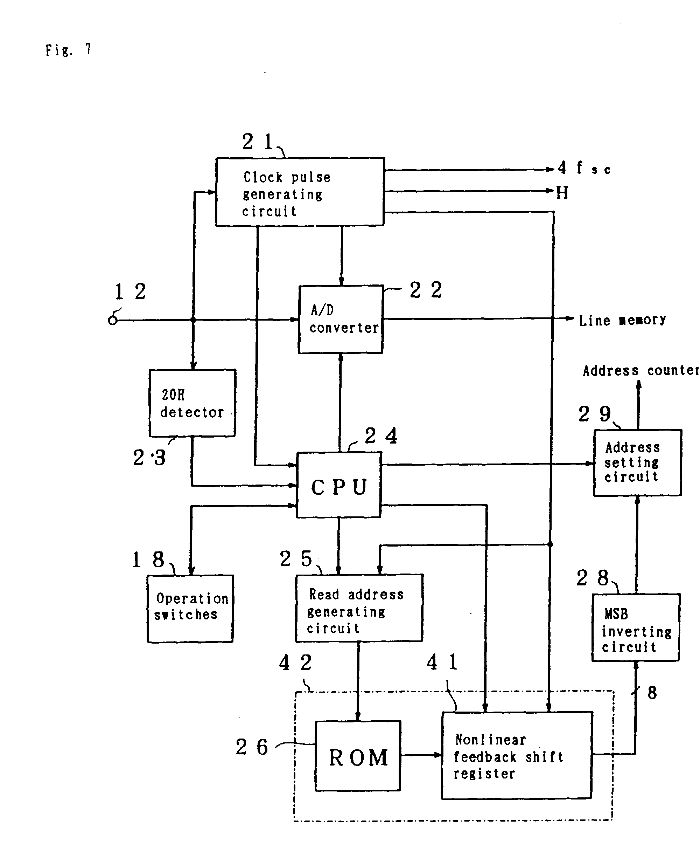

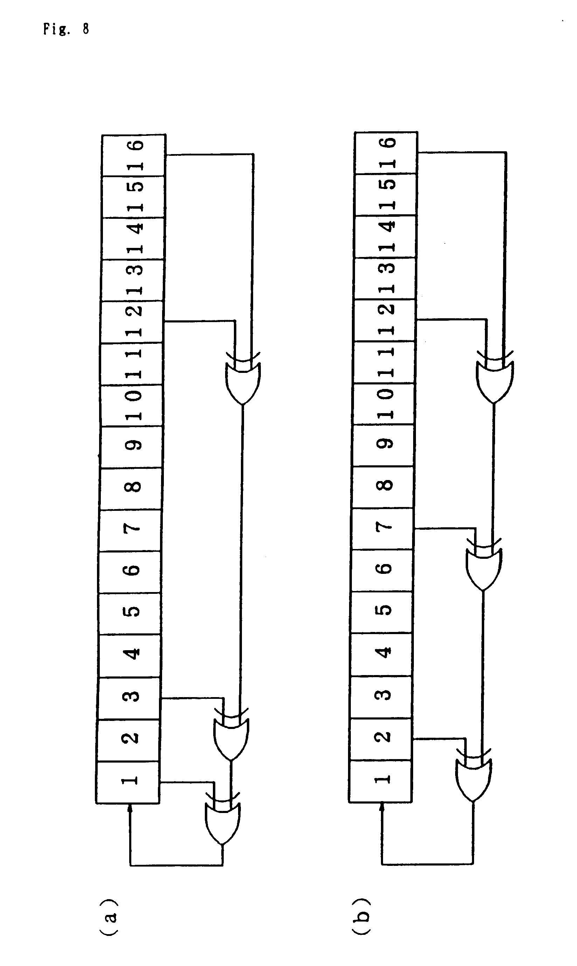

Fig. 7 is a block diagram showing a part corresponding to Fig. 2. The parts corresponding to Fig. 3 are identical and hence explanations are omitted. In the apparatus as shown in Fig. 7, instead of the PN generator 27 in Fig. 2, using a nonlinear feedback shift register 41, it is sealed into one package 42 together with a memory 26 for storing the key data. An example of linear feedback shift register as the source of the nonlinear feedback shift register is shown in Fig. 8. It is known that there are ten methods for 16-stage linear M series wiring system ("Latest Spectrum Diffusion Communication System, pp. 88-90. JATECH, 1978). Fig. 8 is a circuit diagram showing two different examples of the linear feedback shift register. Herein, when the shift register shown in Fig. 8 is composed of field programmable gate array, shift registers differing in the number of stages by one stage each in each package can be set very easily when manufacturing. By selecting the number of stages of shift register from 49 types ranging from 16 to 64, and selecting the feedback loops, the combinations of shift register and feedback loop are about 500 types. Considering also combinations with 64-bit key data of the memory 26, it is impossible to make the same thing unless the package 42 is obtained and disassembled, and the safety against tapping and illegal deciphering is heightened as compared with the apparatus shown in Fig 2. The operation in scrambling and descrambling is same as in Fig. 2.

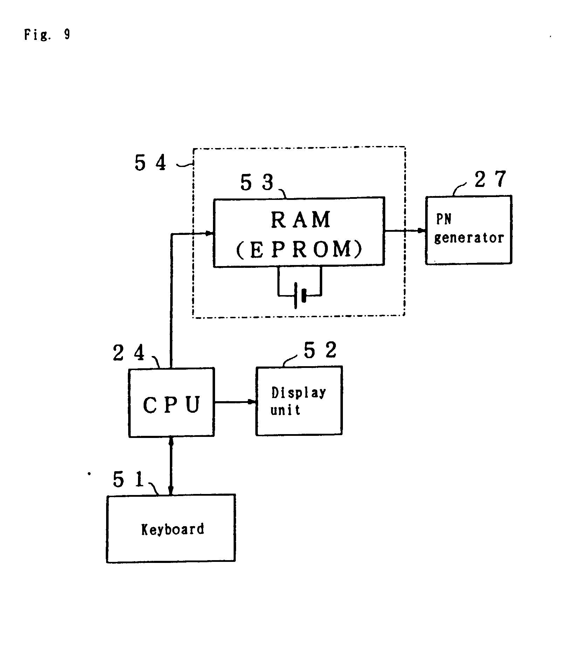

Fig. 9 shows principal parts in a preferred embodiment. Instead of the operation switches 15 to 17 in Fig. 2, a keyboard 51 is used. This keyboard 51 is connected to the CPU 24. The keyboard comprises *, # keys and numeric keys, and for example, the * key is used as input key at start of ciphering and end of deciphering, and the # key is used as the key for start of deciphering and end of ciphering at the same time. The keyboard 51 is, for example, an input part for entering a four-digit code number, and the input code number is displayed in a display unit 52, and is given to the PN generator 27 through the memory 53. Herein, the memory 53 is a random access memory (RAM), or an erasable programmable ROM (EPROM). Supposing the four-digit code number entered from numeric keypad of the keyboard 51 to be a BCD code, it is a numeric string of 0 or 1 of 16 bits, and it is used as the key data. This data is used as the initial value of the PN generator 27. The other operations are same as in Fig. 2. This code number is once written into the memory 53. When the memory 53 is composed of RAM, the battery may be used to back up as shown in the diagram, or without backup, it may be possible to enter every time. Or it may be detachably accommodated in the package 54. If being detachable without backup, the data of code number is lost when dismounted from the main body. By knowing this, by entering again, ciphering and deciphering can be effected.

In this embodiment, since the code number comprises four digits, by random input of four-digit numerals, it is possible to decipher within 10.000 times. To prevent this, same as in the apparatus shown in Fig 7, when the PN generator 27 is selected from 500 types as nonlinear feedback shift register, illegal deciphering is prevented, if the code number is obtained, unless the same apparatus is obtained.

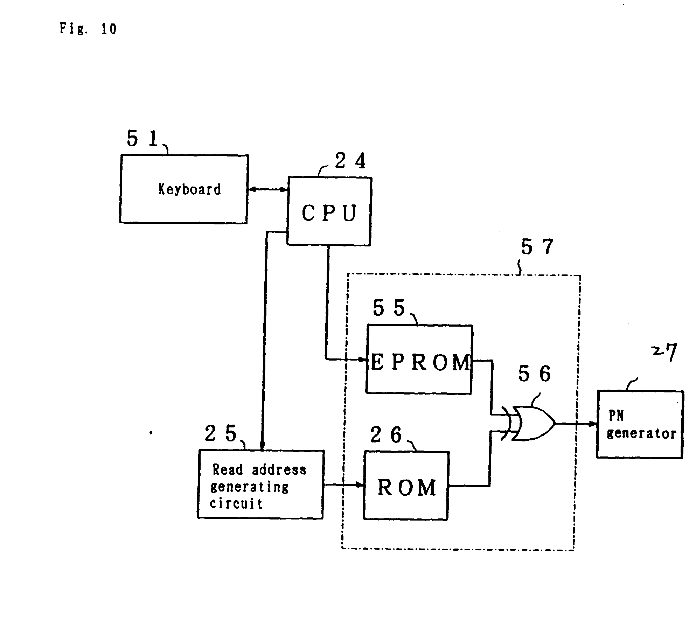

Another embodiment is described while referring to Fig. 10. In this embodiment, too, only different parts from Fig. 2 are explained. In this embodiment, instead of the operation switches 18 (15 to 17), a keyboard 51 is provided, and a four-digit code number is entered in the CPU 24 through the keyboard 51. The CPU 24 holds the four-digit code number as 16-bit binary signal in. for example, a second memory 55 composed of EPROM. Same as in Fig. 2, a read address generating circuit 25 is provided, and key data is read out from the 64-bit first memory (ROM) 26 through the read address generating circuit. In this case, the data is read out in a prescribed procedure so that four bits of the memory 26 may be assigned for one bit of the memory 55. The outputs of the memories 26 and 55 are given to an EOR circuit 56. The EOR circuit 56 is a logic circuit which calculates an exclusive OR of them, and applies 16-bit data to the PN generator 27. Herein, the memories 26, 55 and EOR circuit 56 are contained in one package 57, and detachable from the casing 11. In this case, as compared with the apparatus of Fig 2, the secrecy against illegal deciphering can be enhanced. Herein, as the logic circuit, not limited to the EOR circuit, circuits of arbitrary type such as AND circuit and NOR circuit can be used.

In the foregoing embodiments, video signals of horizontal scanning lines are alternately written into the line memories 35, 36 directly, and the read start position of each line memory is read out from different position in each line by the address setting circuit 29 and read address counter 32 as encrypting process, but it is also possible to compose to write from the address set in the address setting circuit when writing, and readout continuously from 0 to 744 in the read address counter. In this case, it is easily realized by exchanging the write address counter 31 and read address counter 32.

By employing the encrypting processing apparatus of the invention as described specifically herein, scrambling and descrambling of video signal can be realized by the same apparatus. The circuit constitution is relatively simple, and an expensive video signal encrypting apparatus is realized. By using a key data memory, for example, supposing the key data K1 to be 64 bits, the probability of realizing the same key is 1/18,440,000,000 billion, and hence the probability of producing the same is practically none, and a high safety is obtained.

## Claims

1. A video signal encrypting apparatus for scrambling and descrambling video signal of television signal comprising:
a first memory (26) for holding key data for encrypting;
a pair of line memories (35,36) for writing input video signal alternately in every horizontal scanning line;
a pseudo-random number sequence pulse (PN) generator (27) in which the key data of the memory is set as initial value for issuing mutually different pseudo-random pulse signals in every horizontal scanning line;
an address setting circuit (29) for setting one of a) the value corresponding to the output of the PN generator and b) the value obtained by subtracting the output of the PN generator from the maximum address value of the line memory as initial value when scrambling and
to the other of a) the value corresponding to the output of the PN generator and b) the value obtained by subtracting the output of the PN generator from the maximum address value of the line memory as initial value when descrambling; and
an address counter (31,32) for generating an address consecutive from the address set by the address setting circuit, and applying address signals alternately to the pair of line memories in each horizontal scanning line unit, characterised in that the PN generator is either a linear or non-linear feedback field programmable shift register (41).

2. A video signal encrypting apparatus of claim 1, further comprising:
a second memory (55) for storing a reloadable code number in plural digits;
input means (51,24) for entering the code number into the second memory;
a logic circuit (56) for receiving the outputs of the first and second memories (26,55), wherein
the output of the logic circuit is applied to the PN generator as initial value for issuing mutually different pseudo-random pulse signals in every horizontal scanning line.

3. A video signal encrypting apparatus of claim 2, wherein
the first and second memories and logic circuit are put in one package and composed detachably.

4. A video signal encrypting apparatus of claim 1 or 2, wherein the first memory (26) for holding the key data is composed detachably.

5. A video signal encrypting apparatus of any one of claims 1 to 4 wherein the first memory (26) is a nonvolatile memory.

## Patentansprüche

1. Videosignal-Verschlüsselungsvorrichtung zur Videosignal-Verwürflung und -Entwürflung des Fernsehsignals, mit:
einem ersten Speicher (26) zum Halten von Schlüsseldaten zur Verschlüsselung;
einem Paar Zeilenspeichern (35, 36) zum abwechselnden Einschreiben von Eingangs-Videosignalen in jede horizontale Abtastzeile;
einem Pseudozufallszahl-Folgeimpulsgenerator (PN-Generator) (27), in welchem die Schlüsseldaten des Speichers als Initialwert zum Ausgeben wechselseitig verschiedener Pseudozufalls-Impulssignale in jeder horizontalen Abtastzeile eingesetzt werden;
einer Adreßeinstellschaltung (29) zum Einstellen eines von (a) dem dem Ausgangssignal des PN-Generators entsprechenden Wert und (b) dem durch Abziehen des Ausgangssignals des PN-Generators von dem maximalen Adreßwert des Zeilenspeichers erhaltenen Wert als Eingangswert beim Verwürfeln und
auf den anderen von (a) dem dem Ausgangssignal des PN-Generators entsprechenden Wert und (b) dem durch Subtrahieren des Ausgangssignals des PN-Generators von dem maximalen Adreßwert des Zeilenspeichers erhaltenen Wert als Eingangswert beim Entwürfeln; und
einem Adreßzähler (31, 32) zum Erzeugen einer von der durch die Adreßeinstellschaltung eingestellten Adresse fortlaufenden Adresse und Anwenden von Adreßsignalen abwechselnd an dem Paar Zeilenspeicher in jeder horizontalen Abtastzeileneinheit, **dadurch gekennzeichnet,** dass der PN-Generator entweder ein lineares oder nichtlineares rückkoppelfeldprogrammierbares Schieberegister (41) ist.

2. Videosignal-Verschlüsselungsvorrichtung nach Anspruch 1, die weiter umfaßt:
einen zweiten Speicher (55) zum Speichern einer rückladbaren Kodezahl in mehreren Ziffern;
Eingabemittel (51, 24) zum Eingeben der Kodezahl in den zweiten Speicher;
eine Logikschaltung (56) zum Empfangen der Ausgangssignale des ersten und des zweiten Speichers (26, 55), wobei das Ausgangssignal der Logikschaltung an den PN-Generator als Anfangswert zum Ausgeben wechselseitig unterschiedlicher Pseudozufalls-Impulssignale in jeder horizontalen Abtastzeile an den PN-Generator angelegt wird.

3. Videosignal-Verschlüsselungsvorrichtung nach Anspruch 2, bei der der erste und der zweite Speicher und die Logikschaltung in eine Packung eingesetzt und abnehmbar zusammengefügt sind.

4. Videosignal-Verschlüsselungsvorrichtung nach Anspruch 1 oder 2, bei der der erste Speicher (26) zum Halten der Schlüsseldaten abnehmbar zusammengesetzt ist.

5. Videosignal-Verschlüsselungsvorrichtung nach einem der Ansprüche 1 bis 4, bei der der erste Speicher (26) ein nichtflüchtiger Speicher ist.

## Revendications

1. Dispositif de chiffrage de signal vidéo pour brouiller et désembrouiller le signal vidéo d'un signal de télévision comprenant :
une première mémoire (26) pour contenir les données de clé pour le chiffrage ;
deux mémoires de ligne (35, 36) pour écrire le signal vidéo entré de manière alternée dans chaque ligne de balayage horizontal ;
un générateur d'impulsion de séquence de nombres pseudo-aléatoires (PN) (27) dans lequel les données de clé de la mémoire sont fixées en tant que valeur initiale pour sortir des signaux impulsionnels pseudo-aléatoires mutuellement différents dans chaque ligne de balayage horizontal ;
un circuit de détermination d'adresse (29) pour fixer l'une de a) la valeur correspondant à la sortie du générateur de nombres pseudo-aléatoires et b) la valeur obtenue en soustrayant la sortie du générateur de nombres pseudo-aléatoires de la valeur d'adresse maximale de la mémoire de ligne en tant que valeur initiale lors du brouillage et
l'autre de a) la valeur correspondant à la sortie du générateur de nombres pseudo-aléatoires et b) la valeur obtenue en soustrayant la sortie du générateur de nombres pseudo-aléatoires de la valeur d'adresse maximale de la mémoire de ligne en tant que valeur initiale lors du désembrouillage ; et
un compteur d'adresses (31, 32) pour générer une adresse consécutive à partir de l'adresse fixée par le circuit de détermination d'adresse et pour appliquer les signaux d'adresse de manière alternée aux deux mémoires de ligne dans chaque unité de ligne de balayage horizontal, caractérisé en ce que le générateur de nombres pseudo-aléatoires est un registre à décalage programmable à champ de rétroaction soit linéaire, soit non-linéaire (41).

2. Dispositif de chiffrage de signal vidéo selon la revendication 1, comprenant, de plus :
une seconde mémoire (55) pour mémoriser un numéro de code susceptible d'être rechargé de plusieurs chiffres ;
des moyens d'entrée (51, 24) destinés à entrer le numéro de code dans la seconde mémoire ;
un circuit logique (56) pour recevoir les sorties des première et seconde mémoires (26, 55), dans lequel
la sortie du circuit logique est appliquée au générateur de nombres pseudo-aléatoires en tant que valeur initiale pour sortir des signaux impulsionnels pseudo-aléatoires mutuellement différents dans chacune des lignes de balayage horizontal.

3. Dispositif de chiffrage de signal vidéo selon la revendication 2, dans lequel
les première et seconde mémoires en le circuit logique sont placés dans un boîtier et composés de manière amovible.

4. dispositif de chiffrage de signal vidéo selon la revendication 1 ou 2, dans lequel la première mémoire (26) destinée à contenir les données de clé est réalisée de manière amovible.

5. Dispositif de chiffrage de signal vidéo selon l'une quelconque des revendications 1 à 4, dans lequel la première mémoire (26) est une mémoire non-volatile.
